# FASCICULE DE BREVET EUROPEEN

(11) **EP 2 219 287 B1**
(45) Date de publication et mention de la délivrance du brevet: **14.08.2013**
(21) Numéro de dépôt: 10305128.0
(22) Date de dépôt: 08.02.2010
(51) Int. Cl.: H02M 7/487

(54) **Onduleur de tension à 3N-4 niveaux**
Spannungswechselrichter für 3N-4-Niveau
Voltage inverter with 3N-4 levels

(30) Priorité: 11.02.2009 FR 0950842
(43) Date de publication de la demande: 18.08.2010
(73) Titulaire: GE Energy Power Conversion Technology Limited, Rugby Warwickshire CV21 1BU (GB)
(72) Inventeur: Flury, Guy, 68210 Balschwiller (FR)
(74) Mandataire: Blot, Philippe Robert Emile

(56) Documents cités:
- FR-A- 2 437 102
- US-A1- 2006 114 623

## Description

La présente invention concerne un onduleur de tension à 3N-4 niveaux, N étant un nombre entier supérieur ou égal à 3, du type comprenant :
- deux bornes de tension d'entrée ;
- N-1 générateurs de tension continue connectés en série entre les deux bornes de tension d'entrée et reliés entre eux par un point milieu ; deux générateurs extrémaux des N-1 générateurs étant directement reliés à l'une des deux bornes de tension d'entrée ;
- deux premières branches de commutation connectées chacune entre une borne de sortie et une des deux bornes de tension d'entrée ; chaque branche de commutation comprenant N-1 cellules de commutation connectées en série, reliées entre elles par un point milieu;
- des moyens de commande des cellules de commutation des deux premières branches de commutation ;
- N-2 paires de cellules de diodes ; chaque paire de cellules de diodes étant connectée entre un point milieu d'une des deux premières branches de commutation et un point milieu de l'autre des deux premières branches de commutation ; chaque cellule de diodes des N-2 paires de cellules de diodes comprenant au moins une diode ; les diodes des cellules de diodes d'une même paire de cellules de diodes étant connectées en série, dans le même sens et reliées entre elles par un point milieu reliant deux générateurs consécutifs des N-1 générateurs de tension continue.

Plusieurs architectures d'onduleurs de ce type sont déjà connues, par exemple les onduleurs clampés par diodes. Le document FR-A-2 437 102 décrit un onduleur du type clampé par le neutre désigné par l'acronyme anglais NPC pour, "Neutral Point Clamped", répondant à la définition précédente, dans lequel des diodes connectées à un point milieu entre deux générateurs consécutifs, dit point de référence, assurent la répartition de la tension d'entrée entre les transistors à l'état bloqué des deux premières branches de commutation.

Le document US 2006/0114623 A1 décrit également un onduleur de tension répondant à la définition précédente pour N égal à 5, sauf en ce qui concerne le nombre de niveaux l'onduleur décrit dans US 2006/0114623 A1 étant un onduleur à 5 niveaux.

La tension et le courant en sortie d'une telle architecture sont riches en harmoniques nécessitant l'utilisation de moyens de filtrage, posant des problèmes pour des applications à vitesse variable telles qu'une utilisation avec des moteurs par exemple. L'ajout de niveaux supplémentaires par rapport à un onduleur trois

niveaux de type NPC permet de réduire les harmoniques de tension générées par le convertisseur et donc de réduire la taille voire d'éliminer le filtre sinus associé. Cependant le passage d'un onduleur de type NPC à trois niveaux à un onduleur de type NPC à cinq niveaux par exemple, nécessite l'utilisation de quatre transistors IGBT et douze diodes supplémentaires, augmentant fortement les coûts.

Le but de l'invention est de fournir une nouvelle topologie de convertisseurs multi-niveaux à points externes pilotés désignés par l'acronyme anglais EPP pour "External Point Piloted", augmentant le rapport Puissance/Coût en réduisant les harmoniques de tension générés par le convertisseur pour un surcoût modéré.

A cet effet, l'invention a pour objet un onduleur de tension du type précité, caractérisé en ce que les N-1 générateurs comportent 3N-5 générateurs élémentaires de tension continue connectés en série ; les deux générateurs extrémaux des N-1 générateurs directement reliés à l'une des deux bornes de tension d'entrée comprenant deux générateurs élémentaires de tension continue et les autres générateurs des N-1 générateurs comprenant trois générateurs élémentaires ; les générateurs élémentaires d'un même générateur étant reliés en série par un point milieu ;
et en ce qu'il comprend :
- 2N-4 autres branches de commutation connectées chacune entre un des points milieu reliant deux générateurs élémentaires d'un même générateur et un des points milieu reliant deux cellules de commutation d'une même première commutation ; chaque branche des 2N-4 autres branches de commutation comprenant chacune un couple de cellules de commutation bidirectionnel en tension et en courant ; les deux cellules de commutation d'un même couple de cellules de commutation bidirectionnel en tension et en courant étant reliées par un point milieu ;
- des moyens de commande pour assurer la commutation des cellules de commutation desdites 2N-4 autres branches de commutation ;
- les paires de cellules de diodes sont connectées chacune entre le point milieu d'une des deux premières branches de commutation et le point milieu de l'autre des deux premières branches de commutation par les points milieu respectifs des couples de cellules de commutation bidirectionnel en tension et en courant de deux des 2N-4 autres branches de commutation connectées entre le point milieu reliant les deux générateurs élémentaires d'un même générateur des N-1 générateurs de tension continue et le point milieu reliant deux cellules de commutation d'une même première branche de commutation.

Suivant des modes particuliers de réalisation, l'onduleur de tension comporte l'une ou plusieurs des caractéristiques suivantes :
- les deux cellules de commutation d'un même couple de cellules de commutation bidirectionnel en tension et en courant comprennent chacune au moins un interrupteur bidirectionnel en courant et sont connectées tête-bêche en série et reliées par le point milieu ;
- chacune des 2N-2 cellules de commutation des deux premières branches de commutation comprend au moins un interrupteur bidirectionnel en courant, de telle sorte que tous les interrupteurs bidirectionnels des 2N-2 cellules de commutation sont reliés en série et connectés dans le même sens ;
- les moyens pour assurer la commutation des 2N-2 cellules de commutation des deux premières branches de commutation, sont des moyens pour assurer la commutation simultanée des au moins un interrupteur bidirectionnel d'une même cellule de commutation ;
- les moyens de commande pour assurer la commutation des cellules de commutation desdites 2N-4 autres branches de commutation, sont des moyens pour assurer la commutation simultanée des cellules de commutation d'un même couple de cellules de commutation bidirectionnel en tension et en courant de chacune desdites 2N-4 autres branches de commutation ; la commutation de chaque cellule de commutation de chacune desdites 2N-4 autres branches de commutation étant réalisée par la commutation des au moins un interrupteur bidirectionnel de ladite cellule de commutation ;
- les 3N-5 générateurs sont identiques et destinés à imposer une même tension ;
- afin de conserver l'équipotentialité aux bornes de chaque cellule de commutation et de chaque cellule de diodes :

- les cellules de diodes, directement reliées à un couple de cellules de commutation bidirectionnel en tension et en courant connecté à un point milieu entre deux générateurs élémentaires d'un des deux générateurs extrémaux des N-1 générateurs directement reliés à l'une des deux bornes de tension d'entrée, comprennent une diode de même sens que leur cellule de diodes ;
- les autres cellules de diodes comprennent deux diodes reliées en série, connectées dans le même sens ;
- les cellules de commutation des 2N-4 autres branches de commutation directement reliées à un point milieu entre deux générateurs élémentaires d'un des deux générateurs extrémaux des N-1 générateurs directement reliés à l'une des deux bornes de tension d'entrée comprennent un interrupteur bidirectionnel en courant ;
- les cellules de commutation des deux premières branches de commutation directement reliées à une des deux bornes de tension d'entrée ou à la borne de sortie d'un courant comprennent deux interrupteurs bidirectionnels en courant reliés en série, connectés dans le même sens et commandés simultanément par l'unité de commande ;
- les cellules de commutation des 2N-4 autres branches de commutation directement reliées à un point milieu entre deux générateurs élémentaires des autres générateurs des N-1 générateurs consistant en trois générateurs élémentaires comprennent deux interrupteurs bidirectionnels en courant reliés en série, connectés dans le même sens et commandés simultanément par l'unité de commande ; et
- les autres cellules de commutation des deux premières branches de commutation et les autres cellules de commutation des 2N-4 autres branches de commutation comprennent trois interrupteurs bidirectionnels en courant reliés en série, connectés dans le même sens et commandés simultanément par l'unité de commande ;
- chacun des interrupteurs bidirectionnels en courant des cellules de commutation comprend un transistor IGBT et une diode connectée en antiparallèle ;
- chaque transistor IGBT a une résistance d'équilibrage en parallèle afin de garantir une tension maximale à ses bornes ; et
- chaque diode a une résistance d'équilibrage en parallèle afin de garantir une tension maximale à ses bornes.

L'invention sera mieux comprise à la lecture de la description qui va suivre, donnée uniquement à titre d'exemple, et faite en se référant aux dessins, sur lesquels :
- la figure 1 est un schéma électrique d'un onduleur de tension cinq niveaux selon l'invention ;
- la figure 2 est un schéma équivalent d'un interrupteur bidirectionnel en courant et unidirectionnel en tension ;
- les figures 3 à 12 sont des schémas de l'onduleur expliquant son fonctionnement tel que présenté à la figure 1 ;
- la figure 13 est un schéma électrique d'un onduleur selon un autre mode de réalisation de l'invention ;
- la figure 14 est une courbe illustrant une forme d'onde obtenue par la mise en oeuvre de l'onduleur de la figure 13 ; et
- la figure 15 est un schéma électrique d'un onduleur de tension huit niveaux selon l'invention.

La présente invention a pour objet un onduleur en tension à 3N-4 niveaux, où N est un nombre entier supérieur ou égal à 3.

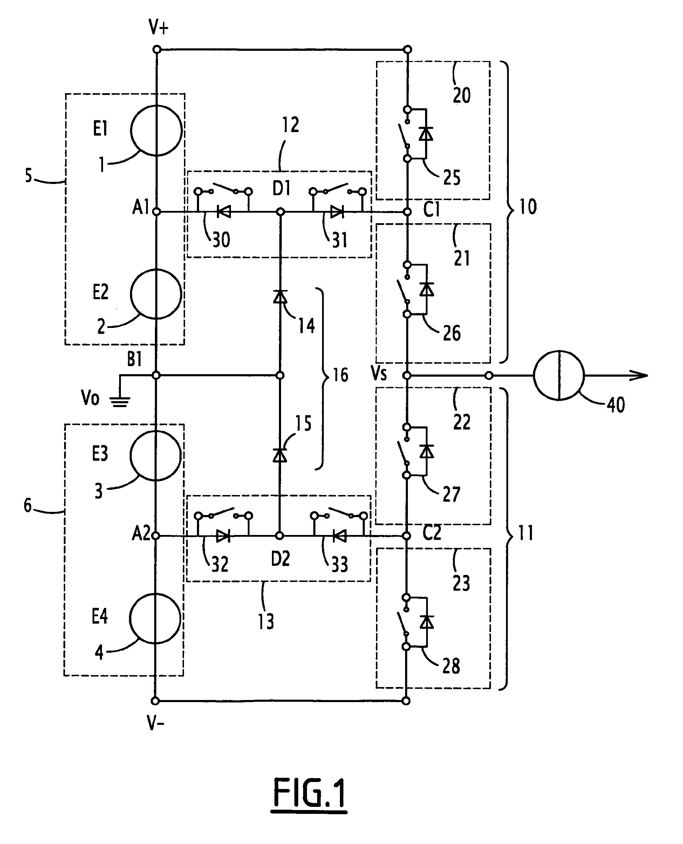

La figure 1 représente un premier mode de réalisation d'un onduleur de tension à 3N-4 niveaux, avec N = 3 soit cinq niveaux, destiné à alimenter un moteur de forte puissance. Il comprend une borne de tension nulle (ou neutre) V₀ et deux bornes d'entrée V₊ et V₋ entre lesquelles sont connectés en série quatre générateurs élémentaires de tension continue 1, 2, 3, 4, définissant trois points milieu A₁, B₁ et A₂ entre deux générateurs élémentaires. Les quatre générateurs élémentaires 1, 2, 3, 4, pris deux par deux, forment deux générateurs 5, 6. Dans les cas où 3N-4 est un nombre impair, avec N un nombre entier supérieur ou égal à 3, le point milieu B₁ est connecté à la borne de tension nulle V₀. L'onduleur comprend également deux branches de commutation latérales 10, 11 connectées chacune entre une des bornes d'entrée V₊, V₋ et une borne de sortie V_{S}. Il comprend enfin deux autres branches de commutation centrales 12, 13 et deux diodes 14, 15 formant une paire de diodes 16.

Les générateurs de tension 1, 2, 3, 4 délivrent respectivement les tensions E1, E2, E3 et E4 volts, avec par exemple E1 = E2 = E3 = E4 = E/4, les quatre tensions étant alors identiques. En variante, ces tensions sont différentes.

Les deux branches de commutation latérales 10, 11 sont identiques et comprennent chacune deux cellules de commutations 20, 21 et 22, 23, reliées en série par un point milieu C₁, C₂ respectivement. Chaque cellule de commutation comprend un interrupteur bidirectionnel en courant 25, 26, 27, 28, de telle sorte que tous les interrupteurs bidirectionnels en courant sont reliés en série et connectés dans le même sens.

Les deux branches de commutation centrales 12, 13 sont identiques et connectées entre les points milieu A₁, C₁ et respectivement A₂, C₂. Elles comprennent chacune deux interrupteurs bidirectionnels en courant tête-bêche en série 30, 31 et 32, 33, reliés par un point milieu, respectivement D₁ et D₂.

Les deux diodes 14, 15 sont montées en série et connectées dans le même sens entre les points milieu D₁, D₂ des deux branches de commutation centrales 12, 13, de telle sorte que la cathode de la diode 14 est reliée au point milieu D₁ et l'anode de la diode 15 est reliée au point milieu D₂. Le point milieu situé entre les deux diodes est relié au point milieu B₁ entre deux générateurs de tension qui est ici la borne de tension nulle V₀.

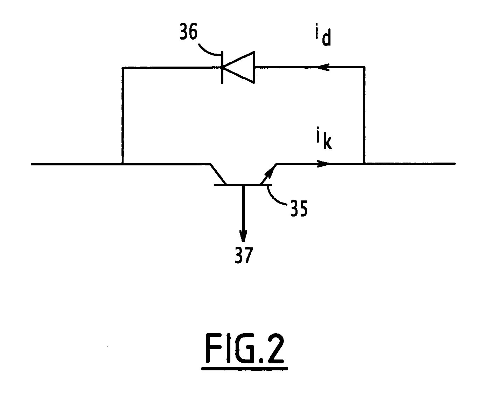

La figure 2 illustre le schéma électrique d'un interrupteur bidirectionnel en courant et unidirectionnel en tension. Chaque interrupteur bidirectionnel de l'onduleur selon l'invention comprend un transistor IGBT 35 et une diode 36 connectée en antiparallèle assurant ainsi des trajets de circulation bidirectionnels de courant lorsque le transistor est passant. Ces deux composants électroniques sont unidirectionnels en courant. Un tel assemblage permet de créer un bloc bidirectionnel en courant mais unidirectionnel en tension. La base de chaque transistor IGBT est destinée à recevoir un signal de commande et est reliée à une unité de commande non représentée.

Sur les figures, les composants sont supposés parfaits, c'est-à-dire que la tension à leurs bornes est nulle lorsqu'ils sont conducteurs. Ainsi, le transistor est schématisé par un interrupteur parfait sur les autres figures. Le signal de commande est un signal d'excitation permettant de contrôler l'ouverture ou la fermeture des interrupteurs. Les modulations de largeur d'impulsion désignées par l'acronyme MLI et utilisées pour la commande de l'onduleur selon l'invention sont identiques aux onduleurs conventionnels.

Les transistors IGBT des interrupteurs bidirectionnels 30, 31 ou 32, 33 d'une même branche centrale sont commandés simultanément par l'unité de commande.

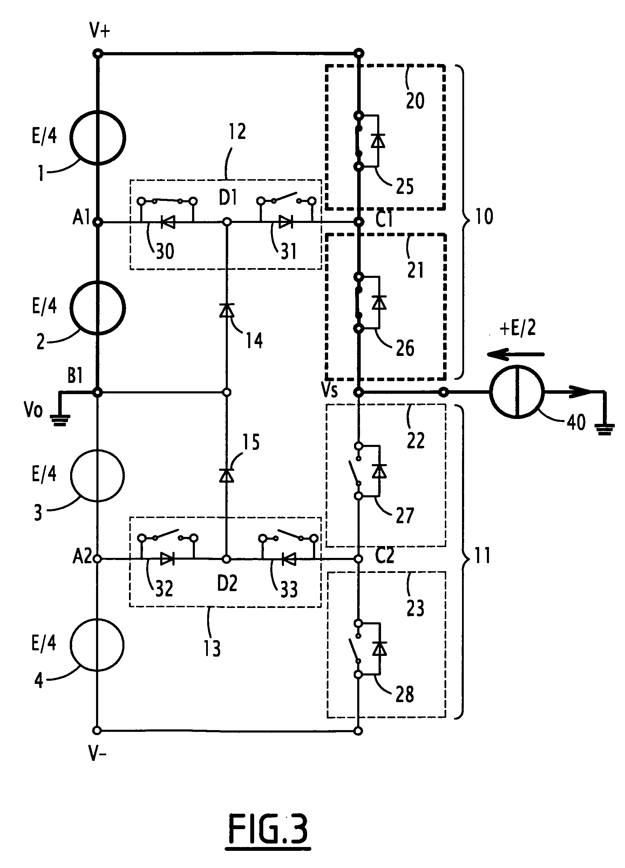

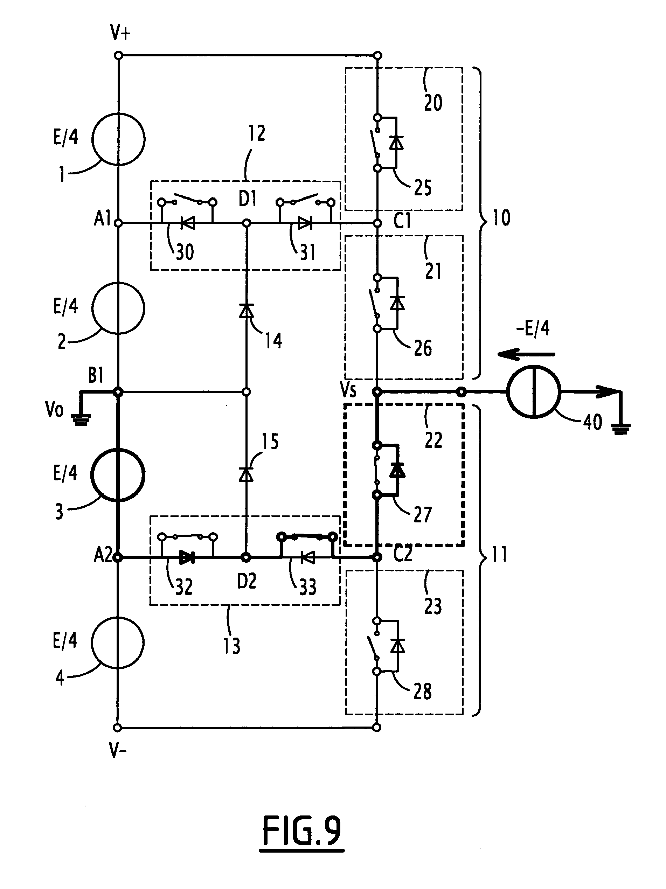

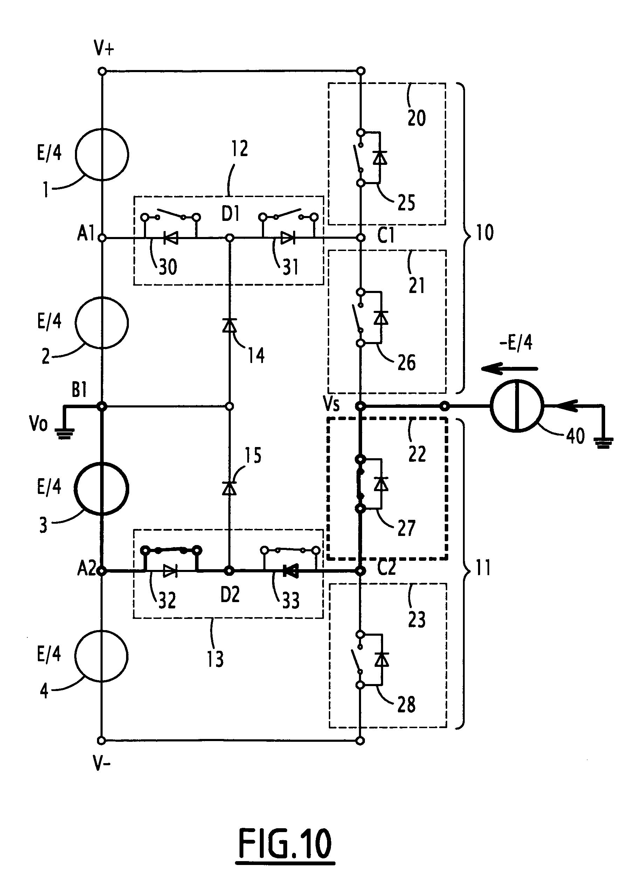

Les figures 3 à 12 présentent la séquence de conduction des transistors IGBT et des diodes d'un onduleur de tension cinq niveaux EPP. Les différentes configurations possibles du convertisseur en fonction du courant et de la commande y sont représentées. Au total dix configurations sont possibles en régime établi de l'onduleur cinq niveaux EPP, car chaque niveau ajoute deux configurations en fonction du sens du courant. Sur les figures, les quatre sources de tension sont parfaites et une charge est représentée par une source de courant parfaite 40.

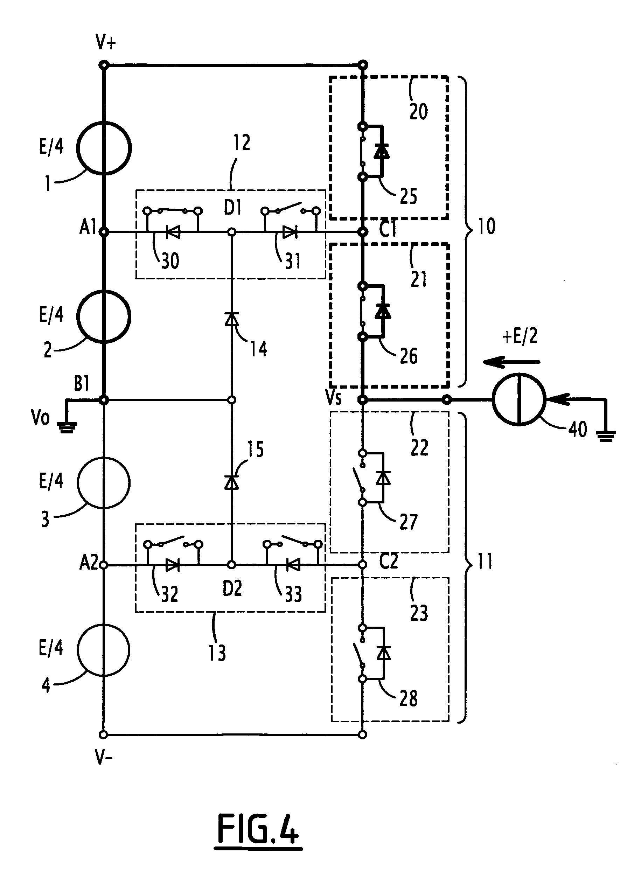

Les figures 3 et 4 présentent la configuration tension/courant de l'onduleur cinq niveaux EPP associée à la commande du niveau +2. Dans ce niveau, seuls les interrupteurs 25, 26 et 30 sont fermés. Le courant circule dans les deux cellules de commutation 20, 21 de la branche de commutation 10 et les deux générateurs 1, 2. Suivant le sens du courant, lorsque les diodes des interrupteurs bidirectionnels sont passantes, le courant circule à travers elles, sinon celui-ci circule à travers les transistors. La tension entre la borne de sortie V_{S} et la borne de tension nulle V₀ est alors de +E/2 Volts.

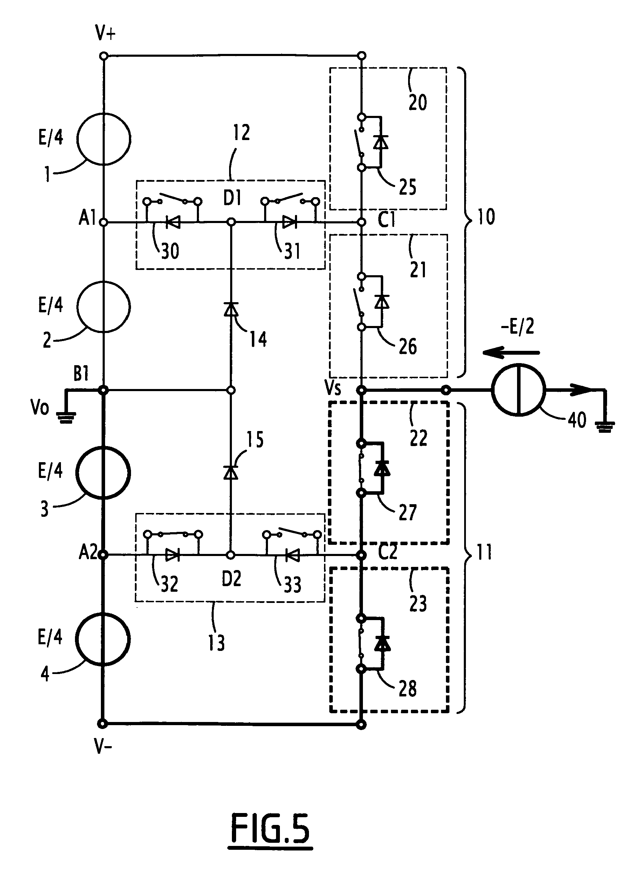

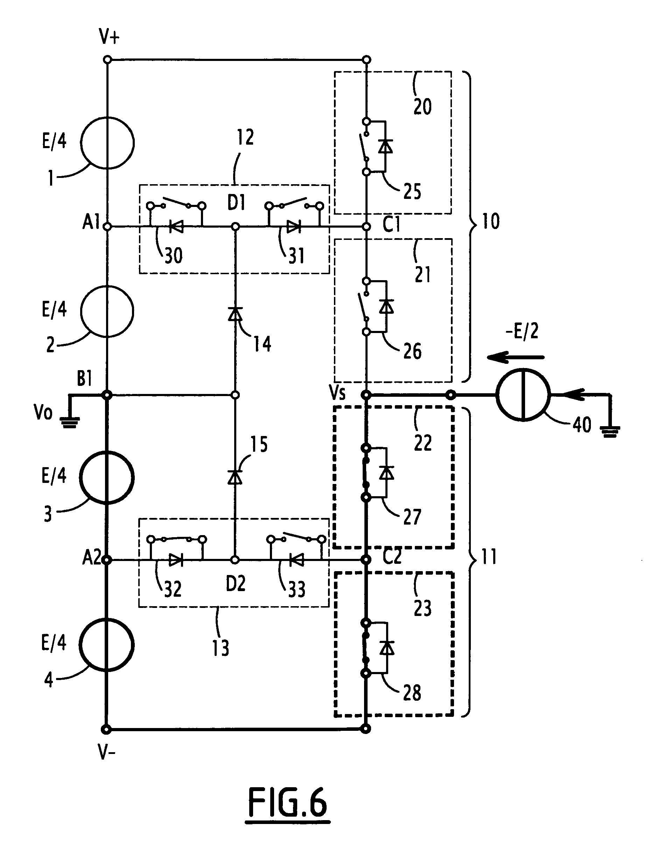

Les configurations tension/courant de l'onduleur cinq niveaux associées à la commande du niveau -2 illustrées sur les figures 5 et 6 sont symétriques à celles des figures 3 et 4. Leurs principes de fonctionnement sont analogues et la tension entre la borne de sortie V_{S} et la borne de tension nulle V₀ est alors de -E/2 Volts.

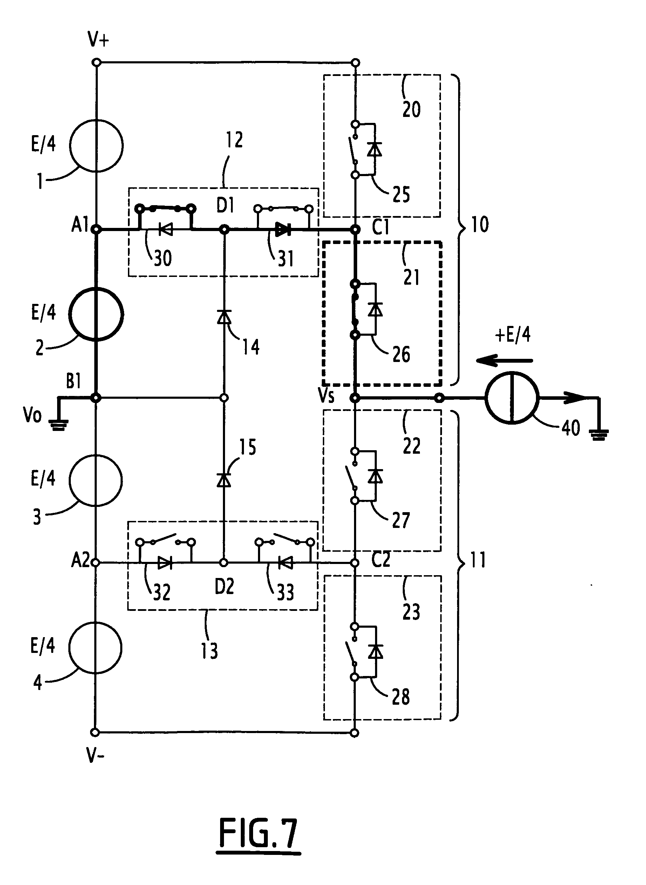

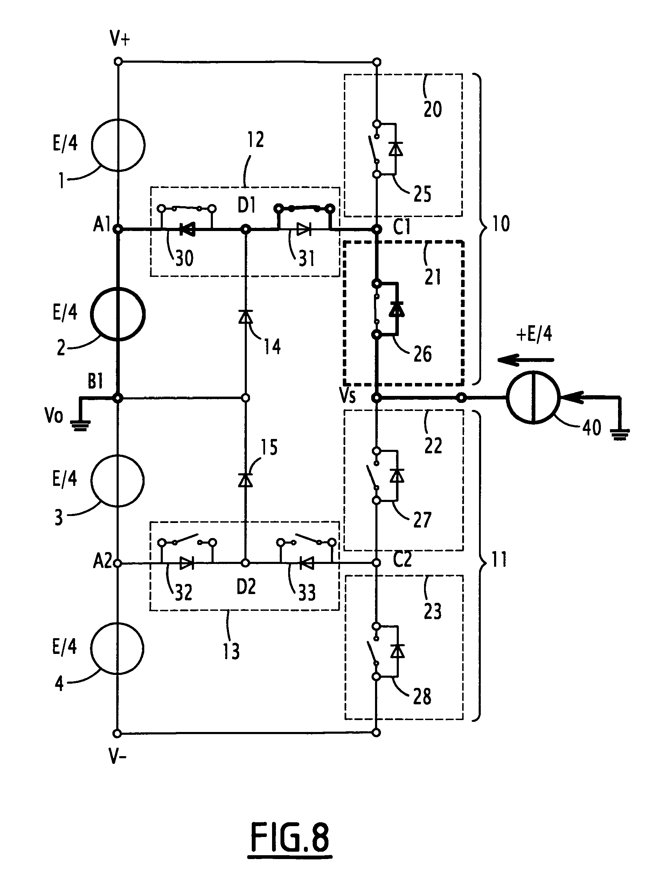

Les configurations tension/courant de l'onduleur cinq niveaux EPP associées aux commandes des niveaux +1 et -1 sont représentées sur les figures 7, 8 et respectivement 9, 10.

Dans le cas du niveau +1 de l'onduleur, seuls les interrupteurs bidirectionnels 30, 31 de la branche de commutation centrale 12 et ceux de la cellule de commutation 26 sont fermés. Le courant circule dans une seule cellule de commutation des branches latérales et dans la branche de commutation centrale qui lui est directement reliée. Cette description de fonctionnement de l'onduleur associé au niveau +1 se transpose au niveau -1. Les tensions entre la borne de sortie V_{S} et la borne de tension nulle V₀ sont alors de +E/4 et -E/4 Volts respectivement.

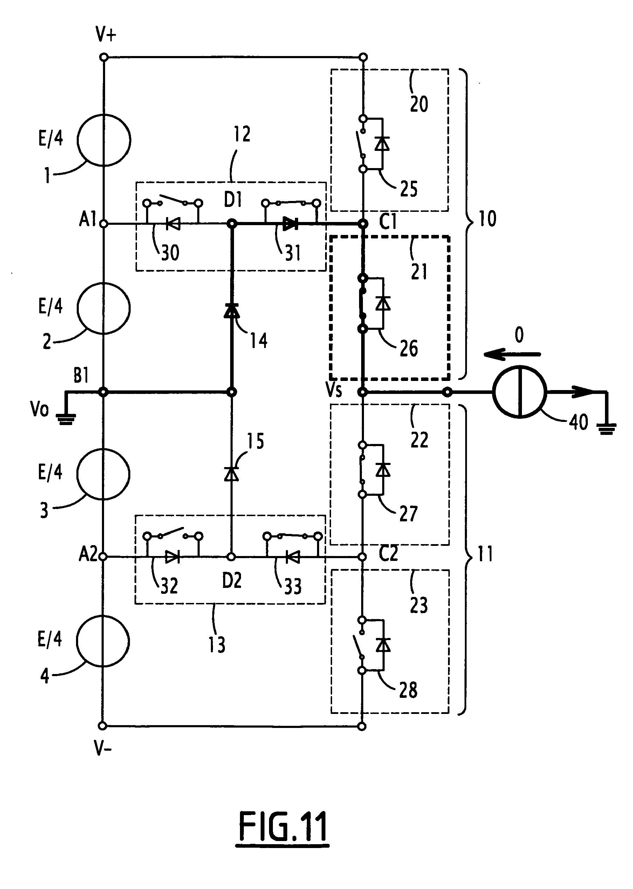

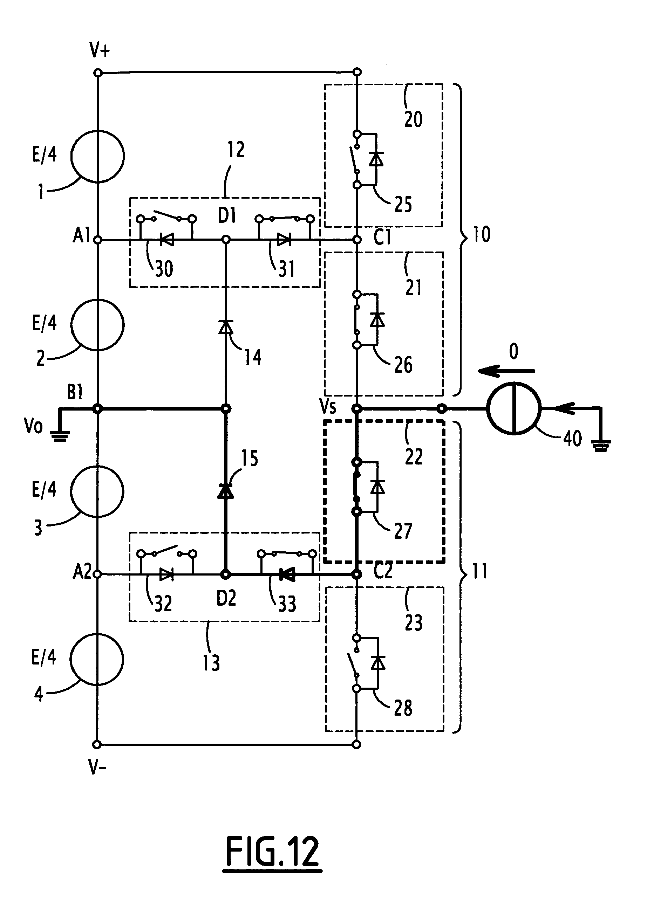

En ce qui concerne les configurations tension/courant associées au niveau 0 de l'onduleur considérées sur les figures 11 et 12, le courant suivant son sens circule dans une des cellules de commutation 26, respectivement 27, à travers la diode de l'interrupteur bidirectionnel 31, respectivement 33, de la branche de commutation centrale 12, respectivement 13, et la diode 14, respectivement 15. Le courant ne circule dans aucun des générateurs de tension. Dans ce niveau, les interrupteurs 31, 33 et ceux des cellules de commutations 21, 22 sont fermés. La tension entre la borne de sortie V_{S} et la borne de tension nulle V₀ est alors nulle.

Dans le cas d'un onduleur tel que représenté sur la figure 1, si E/4 est la tension aux bornes de chacun des générateurs de tension 1 à 4, la tension de commutation aux bornes des interrupteurs bidirectionnels 25 à 28 des cellules de commutation 20 à 23 est égale à E/4 avec une tension maximale aux bornes de ces mêmes cellules de E/2.

L'onduleur cinq niveaux ainsi réalisé présente l'avantage d'ajouter deux niveaux de tension supplémentaires ce qui réduit le taux de distorsion harmonique en tension d'un facteur quatre en comparaison avec une topologie trois niveaux.

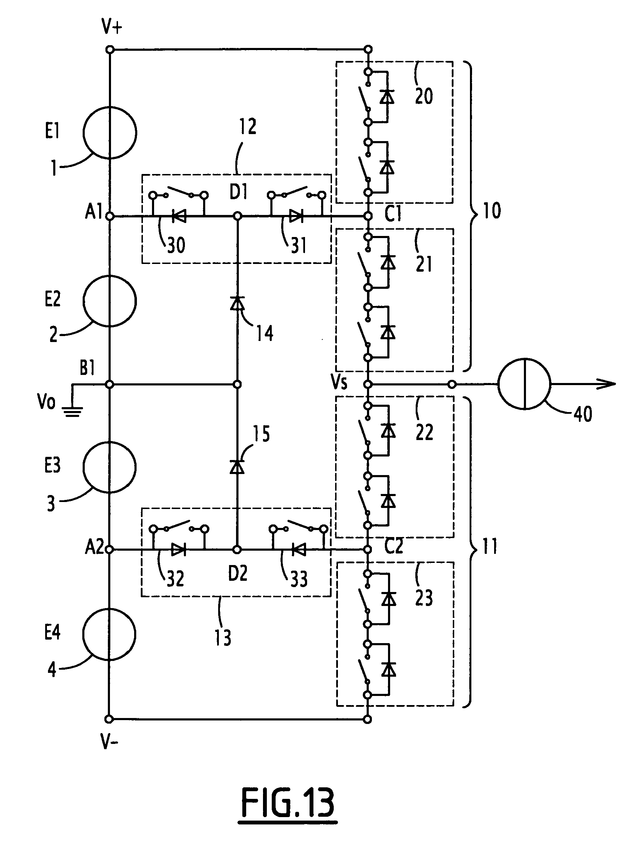

Dans un autre mode de réalisation illustré sur la figure 13, chaque cellule de commutation 20 à 23 des branches latérales comprend deux interrupteurs bidirectionnels en courant reliés en série, connectés dans le même sens et commandés simultanément par l'unité de commande, afin de supporter la tension de référence maximale de E/4.

Dans le cas d'un onduleur tel que représenté sur la figure 13, si E/4 est la tension aux bornes de chacun des générateurs de tension 1 à 4 la tension de commutation aux bornes de chacun des interrupteurs bidirectionnels des cellules de commutation 20 à 23 est divisée par deux par rapport à une structure NPC conventionnelle, soit E/8. Les pertes par commutation dans ces composants sont donc divisées par deux ce qui permet de doubler la fréquence de commutation sans augmenter les pertes.

Par conséquent, cette commutation rapide permet d'améliorer la forme d'onde en courant de sortie de l'onduleur. L'avantage qui en résulte est la réduction de la taille, voire l'élimination totale du filtre sinus associé pour un surcoût modéré par rapport à un onduleur cinq niveaux NPC conventionnel de 4 transistors IGBT supplémentaires et 6 diodes supprimées.

Dans des modes de réalisation particuliers, des résistances d'équilibrage supplémentaires sont avantageusement connectées en parallèle de chaque élément actif, c'est-à-dire transistor et diode afin de garantir une tension maximale de E/4.

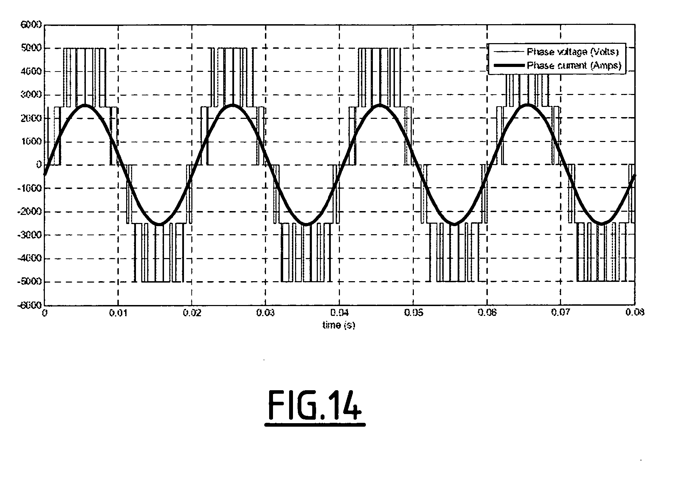

La figure 14 présente un exemple de forme d'onde en tension et en courant par phase d'un onduleur de tension cinq niveaux à points externes pilotés obtenue avec un onduleur tel que décrit dans la figure 13.

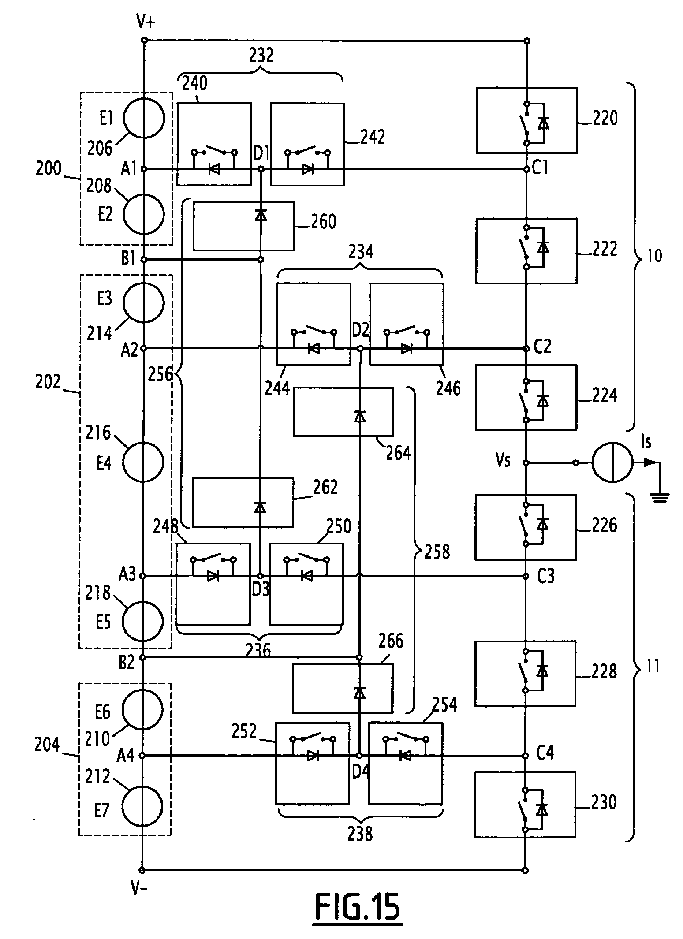

La figure 15 présente le schéma électrique d'un onduleur de tension à 3N-4 niveaux, avec N = 4 soit 8 niveaux, selon l'invention. L'onduleur de tension 8 niveaux comprend deux bornes d'entrée V₊ et V₋ entre lesquelles sont connectés trois générateurs de tension continue 200, 202, 204 en série définissant deux points milieu B₁ et B₂ entre deux générateurs. Les deux générateurs 200, 204, directement reliés à une des deux bornes d'entrée V₊, V₋, dits générateurs extrémaux, comprennent deux générateurs élémentaires reliés en série respectivement 206, 208 et 210, 212 définissant chacun un point milieu A₁, A₄ entre deux générateurs élémentaires 206, 208 et 210, 212 d'un même générateur 200, 204. Le générateur 202 est constitué de trois générateurs élémentaires 214, 216, 218 définissant deux points milieu A₂, A₃ entre deux générateurs élémentaires consécutifs 214, 216, 218 du même générateur 202. Par conséquent, les trois générateurs de tension continue 200, 202, 204 comprennent sept générateurs élémentaires de tension continue 206, 208, 210, 212, 214, 215, 216, 218 connectés en série entre les deux bornes de tension d'entrée V₊, V₋.

Les sept générateurs élémentaires de tension 206, 208, 210, 212, 214, 216 et 218 délivrent respectivement les tensions E1, E2, E3, E4, E5, E6, et E7 volts, avec par exemple E1 = E2 = E3 = E4 = E5= E6 = E7 = E/7, les sept tensions étant alors identiques. En variante, ces tensions sont différentes.

L'onduleur de tension 8 niveaux comprend en outre deux branches de commutation, dites latérales, 10, 11 connectées chacune entre une des deux bornes de tension d'entrée V₊, V₋ respectivement et une borne de sortie V_{S}. Les deux branches de commutation latérales 10, 11 sont identiques et comprennent chacune trois cellules de commutations 220, 222, 224 et 226, 228, 230 reliées en série par un point milieu C₁, C₂, C₃, C₄ respectivement. Chaque cellule de commutation comprend au moins un interrupteur bidirectionnel en courant de telle sorte que tous les interrupteurs bidirectionnels en courant des deux branches de commutation latérales 10, 11 sont reliés en série et connectés dans le même sens ; chaque interrupteur bidirectionnel comprenant un transistor IGBT et une diode connectée en antiparallèle.

L'onduleur de tension 8 niveaux comprend en outre des moyens de commande des cellules de commutation 220, 222, 224, 226, 228, 230 des deux branches de commutation latérales 10, 11. Les moyens pour assurer la commutation des six cellules de commutation 220, 222, 224, 226, 228, 230 des deux branches de commutation latérales 10, 11 sont des moyens pour assurer la commutation simultanée des transistors IGBT des au moins un interrupteur bidirectionnel d'une même cellule de commutation 220, 222, 224, 226, 228, 230.

L'onduleur de tension 8 niveaux comprend en outre quatre autres branches de commutation, dites centrales, 232, 234, 236 et 238. Les quatre branches de commutation centrales 232, 234, 236, 238 sont connectées chacune entre le point milieu Aᵢ reliant les deux générateurs élémentaires d'un même générateur 200, 202, 204 de tension continue et le point milieu Cᵢ reliant deux cellules de commutation d'une même branche de commutation latérale 10, 11, respectifs pour i entier et 1≤i≤4. Elles comprennent chacune un couple 232, 234, 236, 238 de cellules de commutation bidirectionnel en tension et en courant. Les deux cellules de commutation 240 et 242, 244 et 246, 248 et 250, 252 et 254 d'un même couple 232, 234, 236, 238 de cellules de commutation bidirectionnel en tension et en courant sont connectées tête-bêche en série et reliées par un point milieu, respectivement D₁, D₂, D₃, D₄. Chaque cellule de commutation 240, 242, 244, 246, 248, 250, 252, 254 des quatre branches de commutation centrales 232, 234, 236, 238 comprend au moins un interrupteur bidirectionnel en courant dont le sens est le même que celui de la cellule de commutation. Chaque interrupteur bidirectionnel en courant d'une cellule de commutation d'un couple 232, 234, 236, 238 de cellules de commutation bidirectionnel en tension et en courant comprend un transistor IGBT et une diode connectée en antiparallèle.

L'onduleur de tension 8 niveaux comprend en outre des moyens de commande pour assurer la commutation des cellules de commutation des quatre branches de commutation centrales 232, 234, 236, 238. Ces moyens de commande assurent la commutation simultanée des deux cellules de commutation d'un même couple de cellules de commutation bidirectionnel en tension et en courant 240 et 242, 244 et 246, 248 et 250, et enfin 252 et 254. Ils commandent la commutation simultanée des transistors IGBT des interrupteurs bidirectionnels d'une même cellule de commutation 240, 242, 244, 246, 248, 250, 252, 254.

L'onduleur de tension 8 niveaux comprend en outre deux paires 256, 258 de cellules de diodes 260, 262, 264 et 266. Chaque paire de cellules de diodes 256, 258 est connectée entre un point milieu Cᵢ d'une des deux branches de commutation latérale 10 et un point milieu C_{N-2+i} de l'autre des deux branches de commutation latérale 11. Chaque cellule de diode 260, 262, 264, 266 comprend au moins une diode. Les diodes des cellules de diodes d'une même paire 256, 258 de cellules de diodes sont montées en série et connectées dans le même sens entre les deux points milieu D₁, D₃ et D₂, D₄ respectivement des couples de cellules de commutation bidirectionnel en tension et en courant de deux des quatre branches de commutation centrales 232, 236 et 234, 238, de telle sorte que la cathode d'une cellule de diodes 260, 264 de chaque paire de cellules de diodes 256, 258 respectivement, est reliée à un point milieu D₁, D₂ respectivement d'une branche de commutation latérale 232, 234 et l'anode d'une cellule de diodes 262, 266 de chaque paire de cellules de diodes 256, 258 est reliée à un point milieu D₃, D₄ respectivement d'une autre branche de commutation latérale 236, 238. Le point milieu situé entre les cellules de diodes 260, 262 et 264, 266 de chaque paire de cellules de diodes 256, 258 est relié aux points milieu entre deux générateurs consécutifs B₁ et B₂, respectivement.

Le fonctionnement d'un tel onduleur est identique à celui décrit pour l'onduleur en tension 5 niveaux.

Dans un autre mode de réalisation, afin de conserver l'équipotentialité aux bornes de chaque cellule de commutation ou de diodes et ainsi de supporter la tension de référence maximale de E/7 :
- les cellules de commutation 222, 228 des branches de commutation latérales 10, 11 et les cellules de commutation 246, 250 des branches de commutation centrales 234 et 236 comprennent trois interrupteurs bidirectionnels en courant reliés en série, connectés dans le même sens et commandés simultanément par l'unité de commande ;
- les cellules de commutation 220, 224, 226, 228 des branches de commutation latérales 10, 11 directement reliées à une des deux bornes de tension d'entrée V₊, V₋ ou à la borne de sortie d'un courant Vₛ, et les cellules de commutation 244, 248 des branches de commutation centrales 234 et 236 directement reliées à un point milieu A₂, A₃ entre deux générateurs élémentaires 214, 216, 218 du générateur 202 comprennent deux interrupteurs bidirectionnels en courant reliés en série, connectés dans le même sens et commandés simultanément par l'unité de commande ;
- les cellules de diodes 262 et 264 comprennent deux diodes reliées en série, connectées dans le même sens ;
- les autres cellules de commutation 240, 242, 252, 254 des autres branches de commutation centrales 232, 238 directement reliées à un point milieu A₁, A₄ entre deux générateurs élémentaires 206, 208, 210, 212 d'un des deux générateurs extrémaux 200, 204 directement reliés à l'une des deux bornes de tension d'entrée V₊, V₋, comprennent un interrupteur bidirectionnel en courant de même sens que leur cellule de commutation ; et
- les autres cellules de diodes 260, 266, directement reliées à un couple 232, 238 de cellules de commutation bidirectionnel en tension et en courant connecté à un point milieu A₁, A₄ entre deux générateurs élémentaires 206, 208, 210, 212 d'un des deux générateurs extrémaux 200, 204 directement reliés à l'une des deux bornes de tension d'entrée
V₊, V₋, comprennent une diode de même sens que leur cellule de diodes.

Au total, un onduleur de tension EPP à 8 niveaux comprend 34 diodes et 28 transistors IGBT, tandis qu'un onduleur de tension conventionnel NPC compte 56 diodes et 14 transistors IGBT.

Dans des modes de réalisation particuliers, des résistances d'équilibrage supplémentaires sont avantageusement connectées en parallèle de chaque élément actif, c'est-à-dire transistor et diode afin de garantir une tension maximale de E/7.

Bien que la description précédente concerne des onduleurs de tension à 5 et 8 niveaux, la présente invention est applicable à tout onduleur en tension à 3N-4 niveaux, où N est un nombre entier supérieur ou égal à 3.

## Revendications

1. Onduleur de tension comprenant :
- deux bornes de tension d'entrée (V+, V.) ;
- N-1 générateurs de tension continue (5, 6 ; 200, 202, 204) connectés en série entre les deux bornes de tension d'entrée (V₊, V₋) et reliés entre eux par un point milieu (Bᵢ, i entier et 1 ≤ i ≤ (N - 2)); deux générateurs extrémaux (200, 204) des N-1 générateurs étant directement reliés à l'une des deux bornes de tension d'entrée (V₊, V₋) ; N étant un nombre entier supérieur ou égal à 3 ;
- deux premières branches de commutation (10, 11) connectées chacune entre une borne de sortie (Vₛ) et une des deux bornes de tension d'entrée (V₊, V₋); chaque branche de commutation (10, 11) comprenant N-1 cellules de commutation (20, 21, 22, 23 ; 220, 222, 224, 226, 228, 230) connectées en série, reliées entre elles par un point milieu (Cᵢ, i entier et 1 ≤ i ≤ 2 x (N - 2)) ;
- des moyens de commande des cellules de commutation (20, 21, 22, 23 ; 220, 222, 224, 226, 228, 230) des deux premières branches de commutation (10, 11) ;
- N-2 paires (16 ; 256, 258) de cellules de diodes ; chaque paire de cellules de diodes (16 ; 256, 258) étant connectée entre un point milieu (Cᵢ) d'une des deux premières branches de commutation (10) et un point milieu (C_{N-2+i}) de l'autre des deux premières branches de commutation (11) ; chaque cellule de diodes (14, 15 ; 260, 262, 264, 266) des N-2 paires de cellules de diodes comprenant au moins une diode (14, 15) ; les diodes des cellules de diodes (14, 15 ; 260, 262, 264, 266) d'une même paire (16 ; 256, 258) de cellules de diodes étant connectées en série, dans le même sens et reliées entre elles par un point milieu (Bᵢ) reliant deux générateurs consécutifs des N-1 générateurs de tension continue (5, 6; 200, 202, 204),
**caractérisé en ce que** les N-1 générateurs comportent 3N-5 générateurs élémentaires de tension continue (1, 2, 3, 4 ; 206, 208, 210, 212, 214, 215, 216, 218), connectés en série ; les deux générateurs extrémaux (200, 204) des N-1 générateurs directement reliés à l'une des deux bornes de tension d'entrée (V₊, V-) comprenant deux générateurs élémentaires de tension continue (206, 208, 210, 212) et les autres générateurs (202) des N-1 générateurs comprenant trois générateurs élémentaires (214, 216, 218) ; les générateurs élémentaires d'un même générateur étant reliés en série par un point milieu (Aᵢ, i entier et 1 ≤ i ≤ 2 × (N-2)) ;
et **en ce qu'**il comprend :
- 2N-4 autres branches de commutation (12, 13; 232, 234, 236, 238) connectées chacune entre un des points milieu (Aᵢ) reliant deux générateurs élémentaires d'un même générateur (200, 202, 204) et un des points milieu (Cᵢ) reliant deux cellules de commutation d'une même première branche de commutation (10, 11) ; chaque branche des 2N-4 autres branches de commutation comprenant chacune un couple de cellules de commutation bidirectionnel en tension et en courant ; les deux cellules de commutation (240, 242, 244, 246, 248, 250, 252, 254) d'un même couple de cellules de commutation bidirectionnel en tension et en courant étant reliées par un point milieu (Dᵢ, i entier et 1 ≤ i ≤ 2 × (N - 2)) ;
- des moyens de commande pour assurer la commutation des cellules de commutation desdites 2N-4 autres branches de commutation (12, 13 ; 232, 234, 236, 238) ;
- les paires de cellules de diodes (16; 256, 258) sont connectées chacune entre le point milieu (Cᵢ) d'une des deux premières branches de commutation (10) et le point milieu (C_{N-2+i}) de l'autre des deux premières branches de commutation (11) par les points milieu respectifs (Dᵢ, D_{N-2+}¡) des couples de cellules de commutation bidirectionnel en tension et en courant de deux des 2N-4 autres branches de commutation (12, 13 ; 232, 234, 236, 238) connectées entre le point milieu (Aᵢ) reliant les deux générateurs élémentaires d'un même générateur (5, 6 ; 200, 202, 204) des N-1 générateurs de tension continue et le point milieu (Cᵢ) reliant deux cellules de commutation d'une même première branche de commutation (10, 11).

2. Onduleur de tension selon la revendication 1, **caractérisé en ce que** les deux cellules de commutation d'un même couple (12, 13 ; 232, 234, 236, 238) de cellules de commutation bidirectionnel en tension et en courant comprennent chacune au moins un interrupteur bidirectionnel en courant et sont connectées tête-bêche en série et reliées par le point milieu (Dᵢ).

3. Onduleur de tension selon l'une quelconque des revendications précédentes, **caractérisé en ce que** chacune des 2N-2 cellules de commutation (20, 21, 22, 23 ; 220, 222, 224, 226, 228, 230) des deux premières branches de commutation (10, 11) comprend au moins un interrupteur bidirectionnel en courant, de telle sorte que tous les interrupteurs bidirectionnels des 2N-2 cellules de commutation sont reliés en série et connectés dans le même sens.

4. Onduleur de tension selon l'une quelconque des revendications précédentes, **caractérisé en ce que** les moyens pour assurer la commutation des 2N-2 cellules de commutation (20, 21, 22, 23 ; 220, 222, 224, 226, 228, 230) des deux premières branches de commutation (10, 11), sont des moyens pour assurer la commutation simultanée des au moins un interrupteur bidirectionnel d'une même cellule de commutation (20, 21, 22, 23 ; 220, 222, 224, 226, 228, 230).

5. Onduleur de tension selon l'une quelconque des revendications précédentes, **caractérisé en ce que** les moyens de commande pour assurer la commutation des cellules de commutation desdites 2N-4 autres branches de commutation (12, 13; 232, 234, 236, 238), sont des moyens pour assurer la commutation simultanée des cellules de commutation d'un même couple de cellules de commutation bidirectionnel en tension et en courant de chacune desdites 2N-4 autres branches de commutation (12, 13 ; 232, 234, 236, 238) ; la commutation de chaque cellule de commutation (240, 242, 244, 246, 248, 250, 252, 254) de chacune desdites 2N-4 autres branches de commutation (12, 13 ; 232, 234, 236, 238), étant réalisée par la commutation des au moins un interrupteur bidirectionnel de ladite cellule de commutation (240, 242, 244, 246, 248, 250, 252, 254).

6. Onduleur de tension selon l'une quelconque des revendications précédentes, **caractérisé en ce que** les 3N-5 générateurs (1, 2, 3, 4 ; 206, 208, 210, 212, 214, 215, 216, 218) sont identiques et destinés à imposer une même tension.

7. Onduleur de tension selon la revendication 6, **caractérisé en ce que**, afin de conserver l'équipotentialité aux bornes de chaque cellule de commutation et de chaque cellule de diodes :
- les cellules de diodes (260, 266), directement reliées à un couple (232, 238) de cellules de commutation bidirectionnel en tension et en courant connecté à un point milieu (A₁, A₄) entre deux générateurs élémentaires (206, 208, 210, 212) d'un des deux générateurs extrémaux (200, 204) des N-1 générateurs directement reliés à l'une des deux bornes de tension d'entrée (V₊, V.), comprennent une diode de même sens que leur cellule de diodes ;
- les autres cellules de diodes (262, 264) comprennent deux diodes reliées en série, connectées dans le même sens ;
- les cellules de commutation (240, 242, 252, 254) des 2N-4 autres branches de commutation (232, 238) directement reliées à un point milieu (A₁, A₄) entre deux générateurs élémentaires (206, 208, 210, 212) d'un des deux générateurs extrémaux (200, 204) des N-1 générateurs directement reliés à l'une des deux bornes de tension d'entrée (V₊, V₋) comprennent un interrupteur bidirectionnel en courant ;
- les cellules de commutation (220, 224, 226, 228) des deux premières branches de commutation (10, 11) directement reliées à une des deux bornes de tension d'entrée (V₊, V₋) ou à la borne de sortie d'un courant (Vₛ) comprennent deux interrupteurs bidirectionnels en courant reliés en série, connectés dans le même sens et commandés simultanément par l'unité de commande ;
- les cellules de commutation (244, 248) des 2N-4 autres branches de commutation (234, 236) directement reliées à un point milieu (A₂, A₃) entre deux générateurs élémentaires (214, 216, 218) des autres générateurs (202) des N-1 générateurs (200, 202, 204) consistant en trois générateurs élémentaires (214, 216, 218) comprennent deux interrupteurs bidirectionnels en courant reliés en série, connectés dans le même sens et commandés simultanément par l'unité de commande ; et
- les autres cellules de commutation (222, 228) des deux premières branches de commutation (10, 11) et les autres cellules de commutation (246, 250) des 2N-4 autres branches de commutation (234, 236) comprennent trois interrupteurs bidirectionnels en courant reliés en série, connectés dans le même sens et commandés simultanément par l'unité de commande.

8. Onduleur de tension selon l'une quelconque des revendications précédentes, **caractérisé en ce que** chacun des interrupteurs bidirectionnels en courant des cellules de commutation comprend un transistor IGBT et une diode connectée en antiparallèle.

9. Onduleur de tension selon la revendication 8, **caractérisé en ce que** chaque transistor IGBT a une résistance d'équilibrage en parallèle afin de garantir une tension maximale à ses bornes.

10. Onduleur de tension selon l'une quelconque des revendications précédentes, **caractérisé en ce que** chaque diode a une résistance d'équilibrage en parallèle afin de garantir une tension maximale à ses bornes.

## Patentansprüche

1. Spannungsinverter aufweisend:
- zwei Eingangsspannungsanschlüsse (V₊, V₋);
- N-1 Gleichspannungsgeneratoren (5, 6; 200, 202, 204), die zwischen die zwei Eingangsspannungsanschlüsse (V₊, V₋) in Serie geschaltet sind und mittels eines Mittelpunkts (Bi, wobei i ganz und 1≤1≤(N-2) ist) verbunden sind; wobei zwei äußere Generatoren (200, 204) der N-1 Generatoren direkt mit einem der zwei Eingangsspannungsanschlüsse (V₊, V₋) verbunden sind; wobei N eine ganze Zahl, größer oder gleich 3 ist;
- zwei erste Kommutierungszweige (10, 11), die jeder zwischen einen Ausgangsanschluss (V_{S}) und einen der zwei Eingangsspannungsanschlüsse (V₊, V₋) geschaltet sind; wobei jeder Kommutierungszweig (10, 11) N-1 in Reihe geschaltete Kommutierungszellen (20, 21, 22, 23,; 220, 222, 224, 226, 228, 230) aufweist, die miteinander mittels eines Mittelpunkts (C₁, wobei i ganz und 1≤i≤2x(N-2) ist) verbunden sind;
- Mittel zum Steuern der Kommutierungszellen (20, 21, 22, 23; 220, 222, 224, 226, 228, 230) der zwei ersten Kommutierungszweige (10, 11);
- N-2 Paare (16; 256, 258) von Diodenzellen; wobei jedes Paar von Diodenzellen (16; 256, 258) zwischen einen Mittelpunkt (Cᵢ) eines der zwei ersten Kommutierungszweige (10) und einen Mittelpunkt (C_{N-2+i}) des anderen der zwei ersten Kommutierungszweige (11) geschaltet ist; wobei jede Diodenzelle (14, 15; 260, 262, 264, 266) der N-2 Paare von Diodenzellen mindestens eine Diode 14, 15) aufweist; wobei die Dioden der Diodenzellen (14, 15; 260, 262, 264, 266) desselben Paars (16; 256, 258) von Diodenzellen in derselben Richtung in Reihe geschaltet sind und miteinander mittels eines Mittelpunkts (Bi) verbunden sind, der zwei aufeinanderfolgende Generatoren der N-1 Gleichspannungsgeneratoren (5, 6; 200, 202, 204) verbindet,
dadurch charakterisiert, dass die N-1 Generatoren 3N-5 elementare Gleichspannungsgeneratoren (1, 2, 3, 4; 206, 208, 210, 212, 214, 215, 216, 218), die in Serie geschaltet sind, aufweisen; wobei die zwei äußeren Generatoren (200, 204) der N-1 Generatoren, die direkt mit einem der zwei Eingangsspannungsanschlüsse (V₊, V₋) verbunden sind, zwei elementare Gleichspannungsgeneratoren (206, 208, 210, 212) aufweisen und die anderen Generatoren (202) der N-1 Generatoren drei elementare Generatoren (214, 216, 218) aufweisen; wobei die elementaren Generatoren desselben Generators mittels eines Mittelpunkts (Aᵢ, wobei i ganz und 1≤i≤2x(N-2) ist) verbunden sind;
und dadurch, dass er aufweist:
- 2N-4 andere Kommutierungszweige (12, 13; 232, 234, 236, 238), die jeder zwischen einen der Mittelpunkte (Aᵢ), die zwei elementare Generatoren desselben Generators (200, 202, 204) verbinden, und einen der Mittelpunkte (Cᵢ), die zwei Kommutierungszellen desselben ersten Kommutierungszweiges (10, 11) verbinden, geschaltet ist; wobei jeder Zweig der 2N-4 anderen Kommutierungszweige jeweils ein Paar von bezüglich Spannung und Strom bidirektionaler Kommutierungszellen aufweist; wobei die zwei Kommutierungszellen (240, 242, 244, 246, 248, 250, 252, 254) desselben Paares von bezüglich Spannung und Strom bidirektionaler Kommutierungszellen mittels eines Mittelpunkts (Dᵢ, wobei i ganz und 1≤i≤2x(N-2) ist) verbunden sind;
- Steuermittel zum Sicherstellen der Kommutation der Kommutierungszellen der 2N-4 Kommutierungszweige (12, 13; 232, 234, 236, 238);
- wobei die Paare von Diodenzellen (16; 256, 258) jeweils zwischen den Mittelpunkt (Cᵢ) von einem der zwei ersten Kommutierungszweige (10) und den Mittelpunkt (C_{N-2+i}) des anderen der zwei ersten Kommutierungszweige (11) mittels jeweiliger Mittelpunkte (Dᵢ, D_{N-2+1}) der Paare von bezüglich Spannung und Strom bidirektionaler Kommutierungszellen von zwei der 2N-4 anderen Kommutierungszweige (12, 13; 232, 234, 236, 238), die zwischen den Mittelpunkt (Aᵢ), der die beiden elementaren Generatoren desselben Generators (5, 6; 200, 202, 204) der N-1 Gleichspannungsgeneratoren verbindet, und den Mittelpunkt (Cᵢ), der die beiden Kommutierungszellen desselben ersten Kommutierungszweigs (10, 11) verbindet, geschaltet sind.

2. Spannungsinverter gemäß Anspruch 1, dadurch charakterisiert, dass die zwei Kommutierungszellen desselben Paares (12, 13; 232, 234, 234, 238) der bezüglich Spannung und Strom bidirektionaler Kommutierungszellen jeweils mindestens einen bezüglich Strom bidirektionalen Schalter aufweisen und entgegengesetzt in Serie geschaltet sind und mittels des Mittelpunkts (Dᵢ) verbunden sind.

3. Spannungsinverter gemäß einem der vorhergehenden Ansprüche, dadurch charakterisiert, dass jede der 2N-2 Kommutierungszellen (20, 21, 22, 23; 220, 222, 224, 226, 228 230) von zwei ersten Kommutierungszweigen (10, 11) mindestens einen bezüglich Strom bidirektionalen Schalter auf die Weise aufweist, dass alle bidirektionalen Schalter der 2N-2 Kommutierungszellen in Serie geschaltet sind und in der gleichen Richtung verbunden sind.

4. Spannungsinverter gemäß einem der vorhergehenden Ansprüche, dadurch charakterisiert, dass die Mittel zum Sicherstellen der Kommutierung der 2N-2 Kommutierungszellen (20, 21, 22, 23; 220, 222, 224, 226, 228, 230) der zwei ersten Kommutierungszweige (10, 11) Mittel zum Sicherstellen der gleichzeitigen Kommutierung des mindestens einen bidirektionalen Inverters derselben Kommutierungszelle (20, 21, 22, 23; 220, 222, 224, 226, 228, 230) sind.

5. Spannungsinverter gemäß einem der vorhergehenden Ansprüche, dadurch charakterisiert, dass die Mittel zum Steuern zum Sicherstellen der Kommutierung der Kommutierungszellen der 2N-4 anderen Kommutierungszweige (12, 13; 232, 234, 236, 238) Mittel zum Sicherstellen der gleichzeitigen Kommutierung der Kommutierungszellen desselben Paares von bezüglich Spannung und Strom bidirektionaler Kommutierungszellen jedes der 2N-4 anderen Kommutierungszweige (12, 13; 232, 234, 236, 238) sind; wobei die Kommutierung jeder Kommutierungszelle (240, 242, 244, 246, 248, 250, 252, 254) jedes der 2N-4 anderen Kommutierungszweige (12, 13; 232, 234, 236, 238) durch die Kommutierung des mindestens einen bidirektionalen Schalters der Kommutierungszelle (240, 242, 244, 246, 248, 250, 252, 254) realisiert wird.

6. Spannungsinverter gemäß einem der vorhergehenden Ansprüche, dadurch charakterisiert, dass die 3N-5 Generatoren (1, 2, 3, 4; 206, 208, 210, 212, 214, 215, 216, 218) identisch sind und dazu vorgesehen sind, dieselbe Spannung aufzuerlegen.

7. Spannungsinverter gemäß Anspruch 6, dadurch charakterisiert, dass zum Erhalten der Potentialgleichheit an den Anschlüssen jeder Kommutierungszelle und jeder Diodenzelle:
- die Diodenzellen (260, 266), die direkt verbunden sind mit einem Paar (232, 238) von bezüglich Spannung und Strom bidirektionalen Kommutierungszellen, das mit einem Mittelpunkt (A1, A4) zwischen zwei elementaren Generatoren (206, 208, 210, 212) eines der zwei äußeren Generatoren (200, 204) der N-1 Generatoren, die direkt verbunden sind mit einem der zwei Eingangsspannungsanschlüsse (V₊, V-), verbunden ist, eine Diode mit derselben Richtung wie ihre Diodenzelle aufweisen;
- die anderen Diodenzellen (262, 264) zwei in Serie geschaltete Dioden aufweisen, die in derselben Richtung verbunden sind;
- die Kommutierungszellen (240, 242, 252, 254) der 2N-4 anderen Kommutierungszweige (232, 238), die direkt verbunden sind mit einem Mittelpunkt (A1, A4) zwischen zwei elementaren Generatoren (206, 208, 210, 212) eines der zwei äußeren Generatoren (200, 204) der N-1 Generatoren, die direkt mit einem der zwei Eingangsspannungsanschlüsse (V₊, V₋) verbunden sind, einen bezüglich Strom bidirektionalen Schalter aufweisen;
- die Kommutierungszellen (220, 224, 226, 228) der zwei ersten Kommutierungszweige (10, 11), die direkt mit einem der zwei Eingangsspannungsanschlüsse (V₊, V₋) oder mit dem Ausgangsanschluss eines Stroms (V_{S}) verbunden sind, zwei bezüglich Strom bidirektionale Schalter aufweisen, die in Serie geschaltet sind, in derselben Richtung verbunden sind und gleichzeitig von der Steuereinheit gesteuert werden;
- die Kommutierungszellen (244, 248) der 2N-4 anderen Kommutierungszweige (234, 236), die direkt mit einem Mittelpunkt (A₂, A₃) zwischen zwei elementaren Generatoren (214, 216, 218) der anderen Generatoren (202) der N-1 Generatoren (200, 202, 204), die aus drei elementaren Generatoren (214, 216, 218) bestehen, zwei bezüglich Strom bidirektionale Schalter aufweisen, die in Serie geschaltet sind, in der gleichen Richtung verbunden sind und gleichzeitig von der Steuereinheit gesteuert werden; und
- die anderen Kommutierungszellen (222, 228) der zwei ersten Kommutierungszweige (10, 11) und die anderen Kommutierungszellen (246, 250) der 2N-4 anderen Kommutierungszweige (234, 236) drei bezüglich Strom bidirektionale Schalter aufweisen, die in Serie geschaltet sind, in derselben Richtung verbunden sind und gleichzeitig von der Steuereinheit gesteuert werden.

8. Spannungsinverter gemäß einem der vorhergehenden Ansprüche, dadurch charakterisiert, dass jeder der bezüglich Strom bidirektionalen Schalter der Kommutierungszellen einen IGBT-Transistor und eine antiparallel geschaltete Diode aufweist.

9. Spannungsinverter gemäß Anspruch 8, dadurch charakterisiert, dass jeder IGBT-Transistor einen parallel geschalteten Ausgleichswiderstand zum Sicherstellen einer maximalen Spannung an seinen Anschlüssen aufweist.

10. Spannungsinverter gemäß einem der vorhergehenden Ansprüche, dadurch charakterisiert, dass jede Diode einen parallel geschalteten Ausgleichswiderstand zum Sicherstellen einer maximalen Spannung an ihren Anschlüssen aufweist.

## Claims

1. Voltage inverter comprising:
- two input voltage terminals (V₊, V₋);
- N-1 direct voltage generators (5, 6; 200, 202, 204) which are connected in series between the two input voltage terminals (V₊, V₋) and are connected together by a middle point (Bᵢ, i integer and 1 ≤ i ≤ (N-2)); two terminal generators (200, 204) of the N-1 generators being connected directly to one of the two input voltage terminals (V₊, V₋); N being an integer greater than or equal to 3;
- two first commutation branches (10, 11) each connected between an output terminal (Vₛ) and one of the two input voltage terminals (V₊, V₋); each commutation branch (10, 11) comprising N-1 series connected commutation cells (20, 21, 22, 23; 220, 222, 224, 226, 228, 230) connected together by a middle point (Cᵢ, i integer and 1 ≤ i ≤ 2x(N-2));
- control means for controlling the commutation cells (20, 21, 22, 23; 220, 222, 224, 226, 228, 230) of the two first commutation branches (10, 11);
- N-2 pairs (16; 256, 258) of diode cells; each pair of diode cells (16; 256, 258) being connected between a middle point (Cᵢ) of one of the two first commutation branches (10) and a middle point (C_{N-2+i}) of the other of the two first commutation branches (11); each diode cell (14, 15; 260, 262, 264, 266) of the N-2 pairs of diode cells comprising at least one diode (14, 15); the diodes of the diode cells (14, 15; 260, 262, 264, 266) of one pair (16; 256, 258) of diode cells being series connected, in the same direction, and being connected together by a middle point (Bᵢ) connecting two consecutive generators of the N-1 direct voltage generators (5, 6; 200, 202, 204),
**characterized in that** the N-1 generators comprise 3N-5 series connected elementary direct voltage generators (1, 2, 3, 4; 206, 208, 210, 212, 214, 215, 216, 218); the two terminal generators (200, 204) of the N-1 generators connected directly to one of the two input voltage terminals (V₊, V₋) comprising two elementary direct voltage generators (206, 208, 210, 212) and the other generators (202) of the N-1 generators comprising three elementary generators (214, 216, 218); the elementary generators of one generator being series connected by a middle point (Aᵢ, i integer and 1 ≤ i ≤ 2x(N-2));
and **in that** it comprises:
- 2N-4 other commutation branches (12, 13; 232, 234, 236, 238) which are each connected between one of the middle points (Aᵢ) connecting two elementary generators of one generator (200, 202, 204) and one of the middle points (Cᵢ) connecting two commutation cells of a first commutation branch (10, 11); each branch of the 2N-4 other commutation branches comprising a pair of commutation cells bidirectional in terms of voltage and current; the two commutation cells (240, 242, 244, 246, 248, 250, 252, 254) of one pair of commutation cells bidirectional in terms of voltage and current being connected by a middle point (Dᵢ, i integer and 1 ≤ i ≤ 2x(N-2));
- control means for effecting commutation of the commutation cells of said 2N-4 other commutation branches (12,13; 232, 234, 236, 238);
- the pairs of diode cells (16; 256, 258) are each connected between the middle point (Cᵢ) of one of the two first commutation branches (10) and the middle point (C_{N-2+i}) of the other of the two first commutation branches (11) by the respective middle points (Dᵢ, D_{N-2-i}) of the pairs of commutation cells bidirectional in terms of voltage and current of two of the 2N-4 other commutation branches (12, 13; 232, 234, 236, 238) connected between the middle point (Aᵢ) connecting the two elementary generators of one generator (5, 6; 200, 202, 204) of the N-1 direct voltage generators and the middle point (Cᵢ) connecting two commutation cells of a first commutation branch (10, 11).

2. Voltage inverter according to claim 1, **characterized in that** the two commutation cells of one pair (12, 13; 232, 234, 236, 238) of commutation cells bidirectional in terms of voltage and current each comprise at least one switch bidirectional in terms of current and are connected in series head-to-tail and are connected by the middle point (Dᵢ).

3. Voltage inverter according to any one of the preceding claims, **characterized in that** each of the 2N-2 commutation cells (20, 21, 22, 23; 220, 222, 224, 226, 228, 230) of the two first commutation branches (10, 11) comprises at least one switch bidirectional in terms of current, so that all the bidirectional switches of the 2N-2 commutation cells are series connected and are connected in the same direction.

4. Voltage inverter according to any one of the preceding claims, **characterized in that** the means for effecting commutation of the 2N-2 commutation cells (20, 21, 22, 23; 220, 222, 224, 226, 228, 230) of the two first commutation branches (10, 11) are means for effecting the simultaneous commutation of the at least one bidirectional switch of one commutation cell (20, 21, 22, 23; 220, 222, 224, 226, 228, 230).

5. Voltage inverter according to any one of the preceding claims, **characterized in that** the control means for effecting commutation of the commutation cells of said 2N-4 other commutation branches (12, 13; 232, 234, 236, 238) are means for effecting the simultaneous commutation of the commutation cells of one pair of commutation cells bidirectional in terms of voltage and current of each of said 2N-4 other commutation branches (12, 13; 232, 234, 236, 238); the commutation of each commutation cell (240, 242, 244, 246, 248, 250, 252, 254) of each of said 2N-4 other commutation branches (12, 13; 232, 234, 236, 238) being effected by the commutation of the at least one bidirectional switch of said commutation cell (240, 242, 244, 246, 248, 250, 252, 254).

6. Voltage inverter according to any one of the preceding claims, **characterized in that** the 3N-5 generators (1, 2, 3, 4; 206, 208, 210, 212, 214, 215, 216, 218) are identical and are to impose the same voltage.

7. Voltage inverter according to claim 6, **characterized in that**, in order to conserve equipotentiality at the terminals of each commutation cell and of each diode cell:
- the diode cells (260, 266), connected directly to a pair (232, 238) of commutation cells bidirectional in terms of voltage and current connected to a middle point (A₁, A₄) between two elementary generators (206, 208, 210, 212) of one of the terminal generators (200, 204) of the N-1 generators connected directly to one of the two input voltage terminals (V₊, V₋), comprise a diode of the same direction as their diode cell;
- the other diode cells (262, 264) comprise two series connected diodes connected in the same direction;
- the commutation cells (240, 242, 252, 254) of the 2N-4 other commutation branches (232, 238) connected directly to a middle point (A₁, A₄) between two elementary generators (206, 208, 210, 212) of one of the two terminal generators (200, 204) of the N-1 generators connected directly to one of the two input voltage terminals (V₊, V.), comprise a switch bidirectional in terms of current;
- the commutation cells (220, 224, 226, 228) of the two first commutation branches (10, 11) connected directly to one of the two input voltage terminals (V₊, V₋) or to the output terminal of a current (Vₛ) comprise two series connected switches bidirectional in terms of current connected in the same direction and controlled simultaneously by the control unit;
- the commutation cells (244, 248) of the 2N-4 other commutation branches (234, 236) connected directly to a middle point (A₂, A₃) between two elementary generators (214, 216, 218) of the other generators (202) of the N-1 generators (200, 202, 204) consisting in three elementary generators (214, 216, 218) comprise two series connected switches bidirectional in terms of current connected in the same direction and controlled simultaneously by the control unit; and
- the other commutation cells (222, 228) of the two first commutation branches (10, 11) and the other commutation cells (246, 250) of the 2N-4 other commutation branches (234, 236) comprise three series connected switches bidirectional in terms of current connected in the same direction and controlled simultaneously by the control unit.

8. Voltage inverter according to any one of the preceding claims, **characterized in that** each of the switches bidirectional in terms of current of the commutation cells comprises an IGBT transistor and a diode connected in antiparallel.

9. Voltage inverter according to claim 8, **characterized in that** each IGBT transistor has a balancing resistor in parallel in order to ensure a maximum voltage at its terminals.

10. Voltage inverter according to any one of the preceding claims, **characterized in that** each diode has a balancing resistor in parallel in order to ensure a maximum voltage at its terminals.
